# EUROPEAN PATENT SPECIFICATION

(11) **EP 4 245 489 B1**
(45) Date of publication and mention of the grant of the patent: **10.12.2025**
(21) Application number: 23162512.0
(22) Date of filing: 17.03.2023
(51) Int. Cl.: B27D 5/00

(54) **EDGEBANDING MACHINE**
KANTENANLEIMMASCHINE
PLAQUEUSE DE CHANTS

(30) Priority: 18.03.2022 IT 202200005321
(43) Date of publication of application: 20.09.2023
(73) Proprietor: SCM Group S.p.A., 47921 Rimini (RN) (IT)
(72) Inventor: GARAFFONI, Andrea, 47921 RIMINI (RN) (IT)
(74) Representative: Tiburzi, Andrea

(56) References cited:
- EP-A1- 1 462 179
- EP-A1- 2 186 599
- WO-A1-95/26848
- IT-A1- MO20 070 245

## Description

The present invention relates to an edgebanding machine according to the preamble of claim 1. Such an edgebanding machine is known from the document WO 95/26848 A1.

### Field of invention

In particular, the present invention relates to an edgebanding machine provided with a conveying and collection system for conveying a quantity of air and a quantity of machining waste inside the edgebanding machine and for collecting said machining waste inside said edgebanding machines.

Said machining chips are generated during one or more machining phases of a panel by one or more working groups (included in said edgebanding machine), in particular when a portion of an edging tape is applied to said panel or a surface portion of said panel is subjected to machining by said one or more working groups.

In the following, the detailed description will be directed to the edge banding of panels made of wood, but it is clear that the same should not be considered limited to this specific use.

Furthermore, in the detailed description, the machining chips are created by at least one edge scraping unit included in the edgebanding machine.

However, said machining chips can be created by any working group of said edgebanding machine during a panel machining phase, such as for example an edge trimming group, a trimming group, a gleaning group, or a rounding group.

### Prior art

It is known that an edgebanding machine is designed to apply an edging tape to a panel, work said edging tape, remove the machining chips caused by the fact that said edging tape is subject to machining, and subsequently collect these machining chips in a container.

The edging tape to be applied to the panel is often made of plastic material.

The panel may be a panel of wood or another material.

An edge banding machine comprises an edge banding station and a finishing station.

The edgebanding station comprises an edgebanding assembly for applying an edging tape to at least one side of the panel by gluing.

For example, in the case in which the edgebanding machine is designed to work for panels during the movement of said panels on a work table, the edging station can comprise a first plurality of rollers for spreading the glue on at least one side of the panel, while the panel moves on the work table along a feeding direction, as well as a second plurality of rollers for pressing the edging tape to the side of the panel so that the edging tape is glued to the side of the panel.

In general, the edging tape applied to the panel is larger than the thickness of the panel.

In other words, the edging tape has one or more portions, which protrude with respect to the thickness of the panel.

The finishing station comprises a plurality of substations, each of which is provided with a respective working group, which is a respective cutting device.

Each cutting device comprises a trimming unit, a heading unit, a gleaning unit, a rounding unit, and an edge scraping unit.

The trimming unit removes an upper portion and/or a lower portion of the edging tape, which exceeds the thickness of the panel.

The trimming unit cuts the edging tape in length and width, according to the desired length and width.

The gleaning unit creates a connection between the edging tape applied to the thickness of the panel and the upper surface and/or a connection between the edging tape applied to the thickness of the panel and the lower surface of the panel.

The rounding group rounds off the vertical profile of the edging tape.

After the operations performed by the heading unit, the trimming unit, the gleaning unit, and the rounding unit, the surface of the edging tape is not a smooth surface.

In fact, the surface of the edging tape has a plurality of surface irregularities, typically longitudinal, i.e. arranged along the length of the edging tape.

The edge scraping unit is used to finish an edge of the edging tape by eliminating said surface irregularities.

For this purpose, said edge scraping unit is provided with a scraper.

The elimination of these surface irregularities produces machining waste.

A scrap has the shape of a long, thin filament.

Furthermore, said filament can be corrugated due to deformations, which occur during the cutting of the edging tape.

Said machining chips can cause malfunctions of the edgebanding machine.

Currently, said machining chips are sucked up by a suction system and conveyed into a container to be collected.

However, a disadvantage is that the suction is not effective and the machining chips can form a skein.

In particular, the skein can:
- settle on one or more working groups of the edgebanding machine, and/or
- disperse inside the edgebanding machine, so as to require the manual intervention of an operator to remove said skein with the risk of the operator being injured, and/or,
- obstruct the suction system when it is sucked in by said suction system.

The suction system works adequately until a container intended to collect said machining chips starts to fill up (even partially).

In particular, when said container is closed and the suction system is on, the skein formed by the machining chips is crushed on a filtering grate, obstructing the passage of air and causing a pressure drop.

As a result, in the vicinity of the working group in use for machining the panel, the effectiveness of the suction is reduced.

Therefore, the container never fills up completely.

In fact, for each panel worked by the edgebanding machine, machining chips are produced which go directly to block the holes of the filtering grate.

When the free holes of the filter grate, i.e. the holes not blocked by the machining chips are few (compared to the holes blocked by the machining chips), the necessary pressure reduction for the suction is not guaranteed.

Consequently, the machining chips are dispersed inside the edgebanding machine.

Furthermore, a further drawback is given by the fact that it is necessary to frequently empty the container, in which the machining chips are collected since the filtering grate quickly becomes clogged.

### Aim of the invention

The aim of the present invention is to overcome said disadvantages, providing an edgebanding machine provided with a system for conveying and collecting machining chips, which allows a quantity of air and a quantity of machining chips to be conveyed inside the edgebanding machine, to separate said machining chips from said quantity of air and collect said machining chips inside said edgebanding machine.

A second aim of the invention is to provide an edgebanding machine provided with a system for conveying and collecting machining chips comprising a cyclone separator for separating said machining chips from said quantity of air and a container for collecting the machining chips, which have been separated from said quantity of air, in which the structure of said conveying and collection system is designed to collect a quantity of machining chips greater than the quantity of machining chips, which can be collected by a known type of edgebanding machine and empty said container less frequently than the container of a known type of edgebanding machine, at the end of the machining of a panel, without the need to stop the edgebanding machine.

This is due to the fact that there is no filter grate which tends to get clogged quickly over time.

A further aim of the invention is to provide a reliable edgebanding machine with a simple structure and low manufacturing cost.

### Object of the invention

It is therefore, a specific object of the present invention an edgebanding machine for applying an edging tape on at least one panel, comprising:
- at least one first working group for working a portion of said edging tape or a surface portion of said panel so that one or more machining chips are created,
- a conveying and collecting system for conveying a quantity of air and said one or more machining chips inside said edgebanding machine and for collecting said one or more machining chips, wherein said conveying and collecting system comprises:
   at least one first removing device for removing said one or more machining chips by suction, wherein said first removing device is connected to said first working group,
   a cyclone separator for separating said one or more machining chips from said quantity of air, wherein said cyclone separator has:
      a first inlet, connected to said first removing device,
      a first outlet, to be connected in use to a suction device, and
      a second outlet,
   a container for collecting said one or more machining chips, wherein said container has an inlet connected to said second outlet of said cyclone separator,
      wherein
      said conveying and collecting system being configured in such a way that, when said suction device is connected to said first outlet of said cyclone separator and is in use, said one or more machining chips and said quantity of air, due to the suction performed by said suction device, enter said first removing device, reach said cyclone separator, through said first inlet of said cyclone separator, so that said one or more machining chips are separated from said quantity of air through said cyclone separator and fall by gravity inside said container, through said inlet of said container.

Preferred embodiments are defined in the dependent claims.

### List of the attached Figures

The present invention will be now described, for illustrative but not limitative purposes, according to its preferred embodiments, with particular reference to the Figures of the enclosed drawings, wherein:
Figure 1 is a perspective view of a edgebanding machine provided with a system for conveying and collecting machining chips, according to the present invention, in which said conveying system comprises a cyclone separator and a container;
Figure 2 is a side view of the edgebanding machine of Figure 1;
Figure 3 shows in detail a part of the edgebanding machine of Figure 2 relating to the container for collecting machining chips, in which said container has an inlet positioned in correspondence with an outlet of said cyclone separator;
Figure 4 shows the same detail of Figure 3, in which a door has been removed from the container;

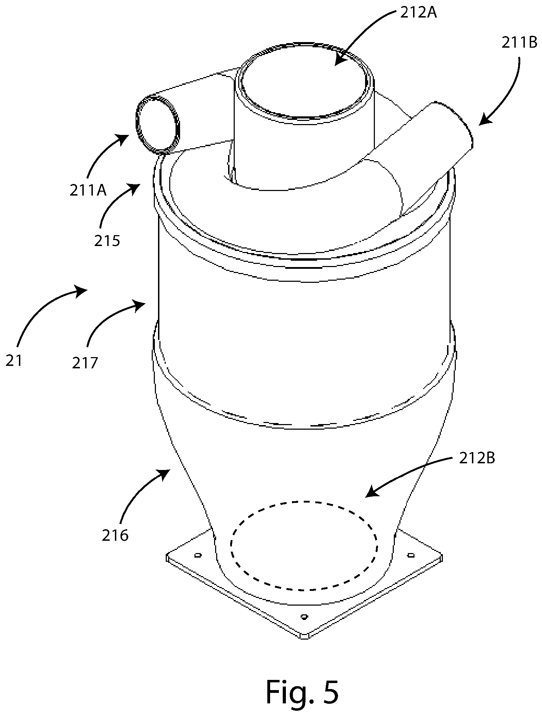

Figure 5 is a perspective view of the cyclone separator;
Figure 6 is an exploded view of the cyclone separator of Figure 5;
Figure 7 shows a panel, on which an edging tape has been applied and two edge scraping units finish a respective corner of said edging tape, of which the respective cutting elements are visible.

In the various Figures, similar parts will be indicated with the same reference numbers.

### Detailed description of the invention

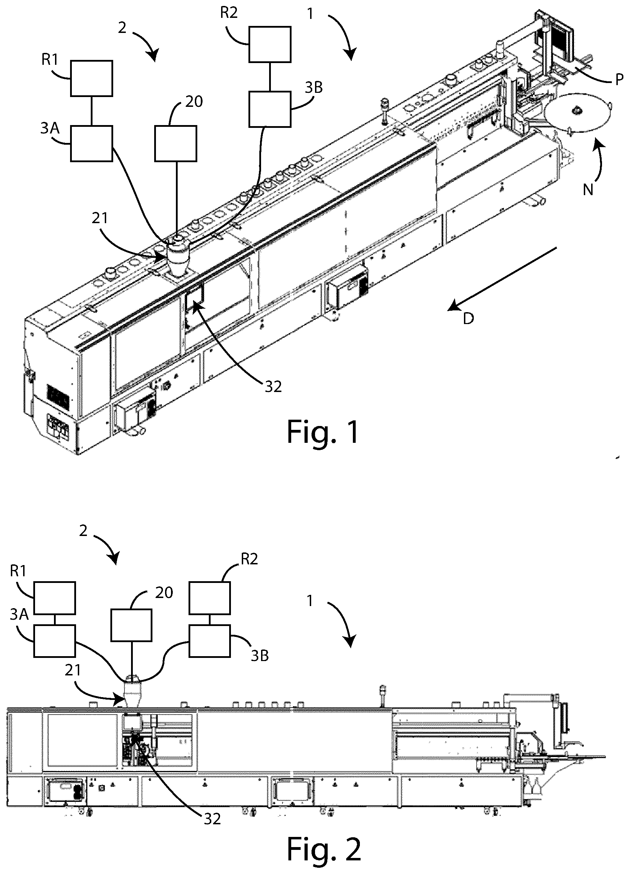

With particular reference to Figures 1 and 2, an edgebanding machine 1 is described for applying an edging tape N to a panel P.

In particular, in the example described, the edgebanding machine 1 is configured to apply an edging tape N to a panel P, when said panel P moves on a work surface along a feed direction D.

Furthermore, in the example described, said panel P is a wooden panel.

However, said panel can be made of a material other than wood.

As stated above, the machining chips F are generated by the need to make the surface of the edging tape N a smooth surface, free from surface irregularities.

Figure 1 is a schematic view of an edgebanding machine 1 and shows at least a first working group R1 for working a portion of said edging tape **N,** or a portion of a surface of said panel so that one or more machining chips F are created, and a conveying and collection system 2 to convey a quantity of air and said one or more machining chips F inside said edgebanding machine and to collect said one or more machining chips F inside said edgebanding machine 1.

In the example described, said first working group R1 is a first edge scraping unit for finishing a first corner of said edging tape N.

In the example described, the edgebanding machine 1 further comprises a second working group R2 (different from the first working group R1) for machining a further portion of said edging tape N (different from the portion of the beading band mentioned above) or a further surface portion of said panel P (different from the surface portion of the panel P mentioned above), so that one or more further machining chips F' are created.

In the example described, said second working group R2 is a second edge scraping unit for finishing a second corner of said edging tape **N,** different from the first corner mentioned above.

However, it is not necessary for the edgebanding machine 1 to include two edge scraping units but it is sufficient for the edgebanding machine to include at least one edge scraping unit.

Said conveying and collection system 2 comprises:
a first removing device 3A for removing said one or more machining chips F by means of suction, wherein said first removing device 3A is connected to said first edge scraping unit R1,
a cyclone separator 21 configured to separate said one or more machining chips F from a quantity of air, and
a container 22 to collect said one or more machining chips F.

With reference to the cyclone separator, said cyclone separator has:
a first input 211A connected to said first removing device 3A,
a first outlet 212A, to be connected in use to a suction device 20, and
a second output 212B.

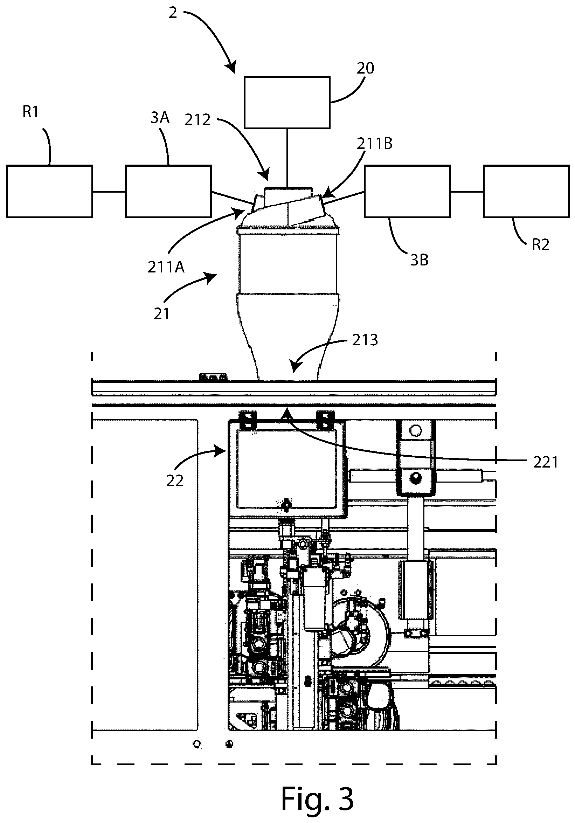

As shown in Figure 3, with reference to the container 22, said container 22 has an inlet 221 connected to the second outlet 212B of said cyclone separator 21.

Said conveying and collection system 2 is configured in such a way that, when said suction device 20 is connected to the first outlet 212A of the cyclone separator 21 and is in use, said one or more machining chips F and said amount of air (for the suction performed by the suction device 20) enter the first removing device 3A, reach the cyclone separator 21 and enter said cyclone separator 21, through the first inlet 211A of the cyclone separator itself, so that said one or more machining chips F are separated from said quantity of air, through the cyclone separator 21, and fall by gravity inside the container 22, through the inlet 221 of the container itself.

In other words, when the suction device 20 is connected to the conveying and collection system and is in use, a quantity of air and a quantity of machining chips in the vicinity of the first edge scraping unit R1 enter the first removing device 3A (connected to said first edge scraping group R1 and to said cyclone separator 21) and reach the first inlet 211A of the cyclone separator 21.

When the amount of air and the amount of machining waste enter the cyclone separator 21 through the first inlet 211A of the cyclone separator itself, the amount of air is separated from the amount of machining waste F through said cyclone separator 21 and sucked in by said suction device 20.

The fact that a quantity of air is sucked together with the machining chips and that said machining chips are separated from said quantity of air by means of the cyclone separator and that only said machining chips fall inside said container 22, allowing the container to collect a greater quantity of machining chips with respect to the quantity of machining chips collected in a container of a known type of edgebanding machine, in which said known type of edgebanding machine does not have said cyclone separator.

In particular, although not shown in the Figures, the first removing device 3A is connected to the first inlet 211A of the cyclone separator 21.

More particularly, the first removing device 3A can be connected to the first inlet 211A of the cyclone separator 21 via a tube (which can preferably be a flexible tube) or a plurality of tubes connected to each other.

In the example described, said first removing device 3A has an input for receiving the machining chips and an output connected to the first input 211A of the cyclone separator 21.

Said conveying and collection system 2 comprises a second removing device 3B for removing one or more further machining chips F' by means of suction, in which said second removing device 3B is connected to said second edge scraping group R2.

Said cyclone separator 21 has:
a second input 211B, different from said first input 211A, connected to
said second removing device 3B.

Said conveying and collection system 2 is configured in such a way that, when the suction device 20 is connected to the first outlet 212A of the cyclone separator 21 and is in use, said one or more further machining chips F' and a further quantity of air (due to the suction performed by the suction device 20) enter the second removing device 3B, reach the cyclone separator 21 and enter said cyclone separator 21 through the second inlet 211B of the cyclone separator itself, so that said one or more further machining chips F' are separated from said additional quantity of air through the cyclone separator 21 and fall by gravity inside the container 22, through the inlet 221 of the container itself.

In other words, if the edgebanding machine 1 comprises two working groups, i.e. two edge scraping units, when the suction device 20 is connected to the conveying and collection system and is in use, also a further quantity of air and a quantity of further machining chips near the second edge scraping unit R2 enter the second removing device 3B (connected to said second edge scraping unit R2) and reach the second inlet 211B of the cyclone separator 21.

When the further amount of air and the amount of further machining waste enters the cyclone separator 21 via the second inlet 211B of the cyclone separator 21, said additional amount of air is separated from said amount of further machining waste via said cyclone separator 21 and sucked in by said suction device 20.

In particular, the second removing device 3B can be connected to the second inlet 211B of the cyclone separator 21 via a further duct or a plurality of further ducts connected to each other.

In the example described, said second removing device 3B has an input for receiving further machining chips and an output connected to the second input 211B of the cyclone separator 21.

With reference to each of the two aforementioned removing devices, each removing device 3A, 3B can be any element having an inlet and an outlet, for example, a tube.

By means of said first removing device 3A and said second removing device 3B, a respective quantity of air and a respective quantity of machining chips are directed respectively towards the first inlet 211A and the second inlet 211B of the cyclone separator 21.

Furthermore, although it is not necessary, the suction device 20 can be included in said edgebanding machine 1.

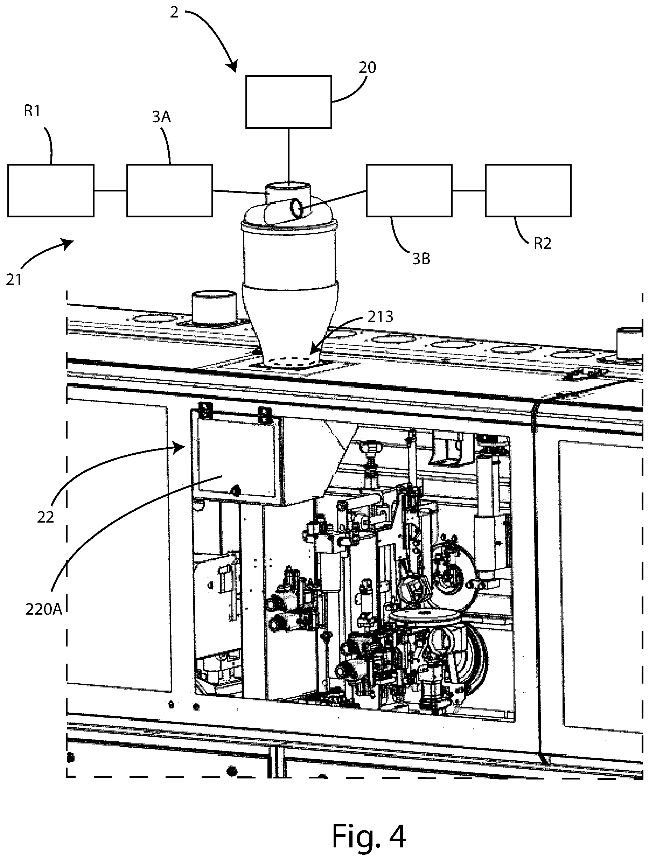

With reference to the container 22, in the example described, said container 22 comprises an opening 220A for accessing the inside of said container 22 and a door 220 for closing said opening (Figure 4).

The opening of the door 220 allows an operator to access the inside of the container 22 and remove said machining chips F and said further machining chips F'.

Said container 22 can comprise at least a portion of transparent material to allow an operator to check how much the internal volume of the container 22 is occupied by said machining chips F and by said further machining chips F'.

For example, said portion of transparent material can be arranged on said door 220 or on a wall of said container 22.

Said portion made of transparent material can be made of glass or plastic material, for example plexiglass^{®}.

However, said container 22 can be without said opening and said door, without departing from the scope of the invention.

In this specific case, to empty the container 22, it is necessary to disconnect the inlet 221 of the container 22 from the second outlet 212B of the cyclone separator 21, disassemble the container from the edgebanding machine 1 and remove the machining waste through the inlet of the container itself.

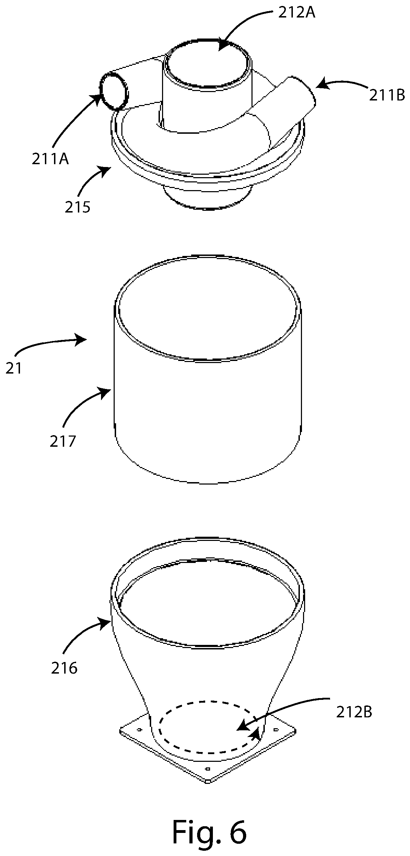

In the example that is described, as shown in Figure 6, said cyclone separator 21 comprises three parts:
- a first end part 215 provided with said first inlet 211A, and with said first outlet 212A,
- a second end part 216 provided with said second outlet 212B, and
- a central part 217 arranged between said first part 215 and said second part 216.

In particular, the first end part 215 and the second end part 216 can be removably coupled respectively with a first end portion and a second end portion of said central part 217.

If the cyclone separator has a second inlet 211B, said first end part 215 is also provided with said second inlet 211B.

Advantageously, the fact that the cyclone separator 21 comprises a plurality of parts that can be coupled/decoupled from each other allows an operator to easily clean the internal volume of said cyclone separator.

However, the cyclone separator 21 can be a single piece, preferably in metallic material, without a portion in transparent material, without departing from the scope of the invention.

In the event that some machining chips are deposited on the internal surface of the cyclone separator and/or near an inlet and/or an outlet of said cyclone separator, an operator can uncouple the parts of said cyclone separator, remove said machining chips, and coupling said parts together again to form the cyclone separator.

In the example being described, the first end part 215 can be coupled to the first end portion of the central part 217 via a form fit coupling and the second end part 216 can be coupled to the second end portion of the central part 217 via a form fit coupling.

In an alternative, the first end portion of the central part 217 can be threaded and the first end part 215 of the cyclone separator 21 can have a threaded portion to be coupled to said first end portion of said central part 217.

Furthermore, the second end portion of the central part 217 can be threaded and the second end part 215 of the cyclone separator 21 can have a threaded portion to be coupled to said second end portion of said central part 217.

It is preferable that at least the central part 217 of the cyclone separator 21 be made of transparent material, such as for example glass or plastic material, for example plexiglass^{®}, to allow an operator to see if machining chips have deposited on the internal surface of the separator cyclone itself.

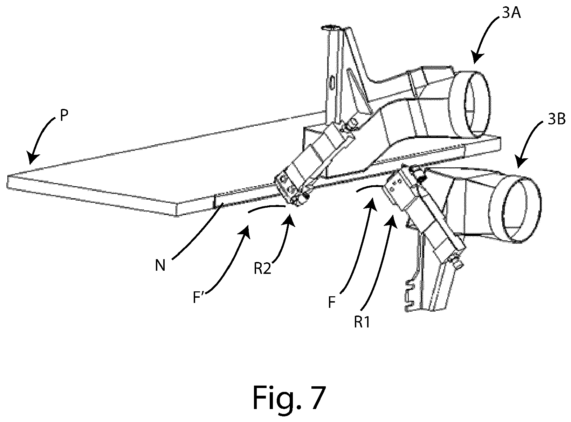

Figure 7 shows a panel P on which an edging tape N has been applied, a first edge or lower edge and a second edge or upper edge of said panel P are subjected to machining by a respective edge scraping unit R1, R2, of which a respective cutting element is visible.

In particular, a first edge scraping group R1 acts on said lower edge through a respective first cutting element, so that a machining chip F is created, and a second edge scraping group R2 acts on said upper edge through a respective second cutting element, so that a further machining chip F' is created.

The present invention refers according to the invention to a edgebanding machine comprising:
- a working table, and
- movement means, arranged on said work surface, for moving said panel P on said working table in an advancement direction D.

Said edgebanding machine 1 is configured to apply an edging tape N to said panel P, when said panel P is moved by said moving, means on said working table in said direction of advance D.

With reference to said moving means, said moving means can comprise a plurality of rollers.

Furthermore, said edgebanding machine can comprise an edging station comprising in turn:
- gluing means for applying a quantity of glue on at least one surface of said panel P,
- pressure means for exerting pressure on said edge band N so that said edge band N is glued to said surface of said panel P.

With reference to said gluing means, said gluing means can comprise a first plurality of rollers for spreading a quantity of glue on at least one surface of the panel P.

With reference to said pressing means, said pressing means can comprise a second plurality of rollers for pressing the edging tape N on said surface of said panel P.

### Advantages

An advantage of the edgebanding machine object of the invention is given by the fact that it is possible to completely fill the volume of the container to collect the machining chips so that the amount of machining chips collected in said container is greater than the amount of machining chips collected from a container of a known type of edgebanding machine.

A further advantage is given by the possibility of emptying said container at the end of the machining of a panel, without the need to stop the edgebanding machine.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Edgebanding machine (1) for applying an edging tape (N) on at least one panel (P), comprising:
- at least one first working group (R1) for working a portion of said edging tape (N) or a surface portion of said panel (P), so that one or more machining chips (F) are created,
- a conveying and collecting system (2) for conveying a quantity of air and said one or more machining chips (F) inside said edgebanding machine (1) and for collecting said one or more machining chips (F), wherein said conveying and collecting system (2) comprises:
at least one first removing device (3A) for removing said one or more machining chips (F) by suction, wherein said first removing device (3A) is connected to said first working group (R1),
a cyclone separator (21) for separating said one or more machining chips (F) from said quantity of air, wherein said cyclone separator has:
a first inlet (211A), connected to said first removing device (3A),
a first outlet (212A), to be connected in use to a suction device (20), and
a second outlet (212B),
a container (22) for collecting said one or more machining chips (F), wherein said container (22) has an inlet (221) connected to said second outlet (212B) of said cyclone separator (21),
said conveying and collecting system (2) being configured in such a way that, when said suction device (20) is connected to said first outlet (212A) of said cyclone separator (21) and is in use, said one or more machining chips (F) and said quantity of air, due to the suction performed by said suction device (20), enter said first removing device (3A), reach said cyclone separator (21), through said first inlet (211A) of said cyclone separator (21), so that said one or more machining chips (F) are separated from said quantity of air through said cyclone separator and fall by gravity inside said container (22), through said inlet (221) of said container (22)
**characterized in that**
said edgebanding machine (1) comprises:
- a working table, and
- moving means, arranged on said working table, for moving said panel (P) on said working table in a forward direction (D),
wherein
said edgebanding machine (1) is configured to apply an edging tape (N) on said panel (P) when said panel (P) is moved by said moving means on said working table in said forward direction (D).

2. Edgebanding machine (1) according to the previous claim, wherein
said edgebanding machine (1) comprises a second working group (R2), different from said first working group (R1), for working a further portion of said edging tape (N) or a further surface portion of said panel (P), so that one or more further machining chips (F') are created,
wherein
said conveying and collecting system (2) comprises:
a second removing device (3B) for removing said one or more further machining chips (F') by suction, wherein said second removing device (3B) is connected to said second working group (R2),
said cyclone separator (21) has:
a second inlet (211B), different from said first inlet (211A), connected to said second removing device (3B),
said conveying and collecting system (2) being configured in such a way that, when said suction device (20) is connected to said first outlet (212A) of said cyclone separator (21) and is in use, said one or more machining chips (F) and a further quantity of air, due to the suction performed by said suction device (20), enter said second removing device (3B), reach said cyclone separator (21) and enter said cyclone separator (21), through said second inlet (211B) of said cyclone separator (21), so that said one or more further machining chips (F') are separated from said further quantity of air, through said cyclone separator (21), and fall by gravity inside said container (22), through said inlet (221) of said container (22).

3. Edgebanding machine (1) according to the claim 1 or 2, wherein
said cyclone separator (21) comprises three parts:
- a first end part (215) provided with at least said first inlet (211A) and said first outlet (212A),
- a second end part (216) provided with said second outlet (212B), and
- a central part (217) arranged between said first part (215) and said second part (216),
wherein
said first end part (215) and said second end part (216) are coupable in a removable manner with a first end portion and a second end portion of said central part (217), respectively.

4. Edgebanding machine (1) according to the previous claim, wherein at least said central part (217) of said cyclone separator (21) comprises at least one portion made of transparent material.

5. Edgebanding machine (1) according to claim 1 or 2, wherein said cyclone separator (21) is a single piece, preferably made of metallic material.

6. Edgebanding machine (1) according to any one of the previous claims, wherein said container (22) has an opening (220A) to access the inside of said container (22) and a door (220) to close said opening (220A).

7. Edgebanding machine (1) according to any one of the previous claims, wherein said container (22) comprises at least one portion made of transparent material.

8. Edgebanding machine (1) according to any one of the previous claims, wherein said first working group (R1) is a first edge scraping group to finish a first edge of said edging tape (N).

9. Edgebanding machine (1) according to any one of claims claims 2-8, wherein said second working group (R2) is a second edge scraping group to finish a second edge of said edging tape (N), different from said first edge.

10. Edgebanding machine (1) according to any one of the previous claims, wherein said edgebanding machine (1) comprises an edging station and said edging station comprises:
- gluing means for applying a quantity of glue on at least one surface of said panel (P),
- pressing means for exerting a pressure on said edging tape (N) so that said edging tape (N) is glued to said surface of said panel (P).

## Patentansprüche

1. Kantenanleimmaschine (1) zum Aufbringen eines Kantenbandes (N) auf mindestens eine Platte (P), umfassend:
- mindestens eine erste Bearbeitungsgruppe (R1) zum Bearbeiten eines Abschnitts des Kantenbandes (N) oder eines Oberflächenabschnitts der Platte (P), so dass ein oder mehrere Bearbeitungsspäne (F) erzeugt werden,
- ein Förder- und Sammelsystem (2) zum Fördern einer Luftmenge und des einen oder der mehreren Bearbeitungsspäne (F) innerhalb der Kantenanleimmaschine (1) und zum Sammeln des einen oder der mehreren Bearbeitungsspäne (F), wobei das Förder- und Sammelsystem (2) umfasst:
mindestens eine erste Entfernungsvorrichtung (3A) zum Entfernen des einen oder der mehreren Bearbeitungsspäne (F) durch Absaugen, wobei die erste Entfernungsvorrichtung (3A) mit der ersten Arbeitsgruppe (R1) verbunden ist,
einen Zyklonabscheider (21) zum Trennen des einen oder der mehreren Bearbeitungsspäne (F) von der Luftmenge, wobei der Zyklonabscheider aufweist:
einen ersten Einlass (211A), der mit der ersten Entnahmevorrichtung (3A) verbunden ist,
einen ersten Auslass (212A), der im Gebrauch mit einer Saugvorrichtung (20) verbunden wird, und einen zweiten Auslass (212B),
einen Behälter (22) zum Sammeln des einen oder der mehreren Bearbeitungsspäne (F), wobei der Behälter (22) einen Einlass (221) aufweist, der mit dem zweiten Auslass (212B) des Zyklonabscheiders (21) verbunden ist,
das Förder- und Sammelsystem (2) so konfiguriert ist, dass, wenn die Absaugvorrichtung (20) mit dem ersten Auslass (212A) des Zyklonabscheiders (21) verbunden und in Betrieb ist, der eine oder die mehreren Bearbeitungsspäne (F) und die Luftmenge aufgrund der Absaugung durch die Absaugvorrichtung (20), in die erste Entnahmevorrichtung (3A) eintreten, den Zyklonabscheider (21) durch den ersten Einlass (211A) des Zyklonabscheiders (21) erreichen, so dass der eine oder die mehreren Bearbeitungsspäne (F) von der Luftmenge durch den Zyklonabscheider getrennt werden und durch die Schwerkraft in den Behälter (22) durch den Einlass (221) des Behälters (22) fallen
**dadurch gekennzeichnet, dass**
die Kantenanleimmaschine (1) umfasst:
- einen Arbeitstisch und
- Bewegungsmittel, die auf dem Arbeitstisch angeordnet sind, um die Platte (P) auf dem Arbeitstisch in einer Vorwärtsrichtung (D) zu bewegen,
wobei
die Kantenanleimmaschine (1) so konfiguriert ist, dass sie ein Kantenband (N) auf die Platte (P) aufbringt, wenn die Platte (P) durch die Bewegungseinrichtung auf dem Arbeitstisch in der Vorwärtsrichtung (D) bewegt wird.

2. Kantenanleimmaschine (1) nach dem vorherigen Anspruch, wobei
die Kantenanleimmaschine (1) eine zweite Arbeitsgruppe (R2) umfasst, die sich von der ersten Arbeitsgruppe (R1) unterscheidet, um einen weiteren Abschnitt des Kantenbandes (N) oder einen weiteren Oberflächenabschnitt der Platte (P) zu bearbeiten, so dass ein oder mehrere weitere Bearbeitungsspäne (F') erzeugt werden,
wobei
das Förder- und Sammelsystem (2) umfasst:
eine zweite Entfernungsvorrichtung (3B) zum Entfernen des einen oder der mehreren weiteren Bearbeitungsspäne (F') durch Absaugen, wobei die zweite Entfernungsvorrichtung (3B) mit der zweiten Arbeitsgruppe (R2) verbunden ist,
der Zyklonabscheider (21) hat:
einen zweiten Einlass (211B), der sich von dem ersten Einlass (211A) unterscheidet und mit der zweiten Entnahmevorrichtung (3B) verbunden ist,
wobei das Förder- und Sammelsystem (2) so konfiguriert ist, dass, wenn die Absaugvorrichtung (20) mit dem ersten Auslass (212A) des Zyklonabscheiders (21) verbunden ist und in Betrieb ist, der eine oder die mehreren Bearbeitungsspäne (F) und eine weitere Luftmenge aufgrund der Absaugung durch die Absaugvorrichtung (20) in die zweite Entnahmevorrichtung (3B) eintreten, den Zyklonabscheider (21) erreichen und in den Zyklonabscheider (21) durch den zweiten Einlass (211B) des Zyklonabscheiders (21) eintreten, so dass der eine oder die mehreren weiteren Bearbeitungsspäne (F') von der weiteren Luftmenge durch den Zyklonabscheider (21) getrennt werden und durch die Schwerkraft in den Behälter (22) durch den Einlass (221) des Behälters (22) fallen.

3. Kantenanleimmaschine (1) nach Anspruch 1 oder 2, wobei
der Zyklonabscheider (21) besteht aus drei Teilen:
- ein erstes Endteil (215), das mit mindestens dem ersten Einlass (211A) und dem ersten Auslass (212A) versehen ist,
- ein zweites Endteil (216), das mit dem zweiten Auslass (212B) versehen ist, und
- ein zentraler Teil (217) zwischen dem ersten Teil (215) und dem zweiten Teil (216) angeordnet ist,
wobei
der erste Endteil (215) und der zweite Endteil (216) mit einem ersten Endabschnitt bzw. einem zweiten Endabschnitt des Mittelteils (217) abnehmbar verbunden werden können.

4. Kantenanleimmaschine (1) nach dem vorhergehenden Anspruch, wobei zumindest der mittlere Teil (217) des Zyklonabscheiders (21) zumindest einen Abschnitt aus transparentem Material aufweist.

5. Kantenanleimmaschine (1) nach Anspruch 1 oder 2, wobei der Zyklonabscheider (21) aus einem einzigen Stück, vorzugsweise aus metallischem Material, besteht.

6. Kantenanleimmaschine (1) nach einem der vorhergehenden Ansprüche, wobei der Behälter (22) eine Öffnung (220A) für den Zugang zum Inneren des Behälters (22) und eine Tür (220) zum Schließen der Öffnung (220A) aufweist.

7. Kantenanleimmaschine (1) nach einem der vorhergehenden Ansprüche, wobei der Behälter (22) mindestens einen Teil aus transparentem Material aufweist.

8. Kantenanleimmaschine (1) nach einem der vorhergehenden Ansprüche, wobei die erste Arbeitsgruppe (R1) eine erste Kantenabstreifgruppe ist, um eine erste Kante des Kantenbandes (N) zu bearbeiten.

9. Kantenanleimmaschine (1) nach einem der Ansprüche 2 bis 8, wobei die zweite Arbeitsgruppe (R2) eine zweite Kantenabstreifgruppe ist, um eine zweite Kante des Kantenbandes (N) zu bearbeiten, die sich von der ersten Kante unterscheidet.

10. Kantenanleimmaschine (1) nach einem der vorhergehenden Ansprüche, wobei die Kantenanleimmaschine (1) eine Kantenbearbeitungsstation umfasst und die Kantenbearbeitungsstation umfasst:
- Klebemittel zum Auftragen einer Klebstoffmenge auf mindestens eine Oberfläche der Platte (P),
- Druckmittel zum Ausüben eines Drucks auf das Einfassungsband (N), so dass das Einfassungsband (N) an die Oberfläche der Platte (P) geklebt wird.

## Revendications

1. Machine à plaquer les chants (1) pour l'application d'une bande de chant (N) sur au moins un panneau (P), comprenant:
- au moins un premier groupe de travail (R1) pour travailler une partie de ladite bande de chant (N) ou une partie de la surface dudit panneau (P), de manière à créer un ou plusieurs copeaux d'usinage (F),
- un système de transport et de collecte (2) pour transporter une quantité d'air et ledit ou plusieurs copeaux d'usinage (F) à l'intérieur de ladite Machine à plaquer les chants (1) et pour collecter lesdits copeaux d'usinage (F), dans laquelle ledit système de transport et de collecte (2) comprend:
au moins un premier dispositif d'enlèvement (3A) pour enlever ledit ou plusieurs copeaux d'usinage (F) par aspiration, ledit premier dispositif d'enlèvement (3A) étant relié au premier groupe de travail (R1),
un séparateur cyclonique (21) pour séparer lesdits un ou plusieurs copeaux d'usinage (F) de ladite quantité d'air, dans laquelle ledit séparateur cyclonique a:
une première entrée (211A), reliée au premier dispositif d'extraction (3A),
une première sortie (212A), destinée à être connectée à un dispositif d'aspiration (20), et une seconde sortie (212B),
un conteneur (22) pour collecter lesdits un ou plusieurs copeaux d'usinage (F), dans laquelle ledit conteneur (22) a une entrée (221) connectée à ladite seconde sortie (212B) dudit séparateur cyclonique (21),
ledit système de transport et de collecte (2) étant configuré de telle sorte que, lorsque ledit dispositif d'aspiration (20) est connecté à ladite première sortie (212A) dudit séparateur cyclonique (21) et est en service, lesdits un ou plusieurs copeaux d'usinage (F) et ladite quantité d'air, en raison de l'aspiration effectuée par ledit dispositif d'aspiration (20), entrent dans ledit premier dispositif d'extraction (3A), atteignent ledit séparateur cyclonique (21), par ladite première entrée (211A) dudit séparateur cyclonique (21), de sorte que lesdits un ou plusieurs copeaux d'usinage (F) sont séparés de ladite quantité d'air par ledit séparateur cyclonique et tombent par gravité à l'intérieur dudit conteneur (22), par ladite entrée (221) dudit conteneur (22)
**caractérisée en ce que**
ladite Machine à plaquer les chants (1) comprend:
- une table de travail, et
- des moyens de déplacement, disposés sur ladite table de travail, pour déplacer ledit panneau (P) sur ladite table de travail dans une direction avant (D),
dans laquelle
ladite Machine à plaquer les chants (1) est configurée pour appliquer une bande de chant (N) sur ledit panneau (P) lorsque ledit panneau (P) est déplacé par ledit moyen de déplacement sur ladite table de travail dans ladite direction avant (D).

2. Machine à plaquer les chants (1) selon la revendication précédente, dans laquelle
ladite Machine à plaquer les chants (1) comprend un deuxième groupe de travail (R2), différent dudit premier groupe de travail (R1), pour travailler une autre partie de ladite bande de chant (N) ou une autre partie de surface dudit panneau (P), de manière à créer un ou plusieurs autres copeaux d'usinage (F'),
dans laquelle
ledit système de transport et de collecte (2) comprend:
un deuxième dispositif d'enlèvement (3B) pour enlever ledit ou plusieurs autres copeaux d'usinage (F') par aspiration, ledit deuxième dispositif d'enlèvement (3B) étant relié au deuxième groupe de travail (R2),
ledit séparateur cyclonique (21) a:
une deuxième entrée (211B), différente de la première entrée (211A), reliée au deuxième dispositif d'extraction (3B),
ledit système de transport et de collecte (2) est configuré de telle sorte que, lorsque ledit dispositif d'aspiration (20) est connecté à ladite première sortie (212A) dudit séparateur cyclonique (21) et est utilisé, lesdits un ou plusieurs copeaux d'usinage (F) et une autre quantité d'air, due à l'aspiration effectuée par ledit dispositif d'aspiration (20), pénètrent dans ledit second dispositif d'enlèvement (3B), atteignent ledit séparateur cyclonique (21) et entrent dans ledit séparateur cyclonique (21), par ladite deuxième entrée (211B) dudit séparateur cyclonique (21), de sorte que lesdits un ou plusieurs autres copeaux d'usinage (F') sont séparés de ladite autre quantité d'air, par ledit séparateur cyclonique (21), et tombent par gravité à l'intérieur dudit conteneur (22), par ladite entrée (221) dudit conteneur (22).

3. Machine à plaquer les chants (1) selon la revendication 1 ou 2, dans laquelle
ledit séparateur cyclonique (21) comprend trois parties:
- une première partie terminale (215) pourvue d'au moins ladite première entrée (211A) et ladite première sortie (212A),
- une deuxième partie d'extrémité (216) pourvue de ladite deuxième sortie (212B), et
- une partie centrale (217) disposée entre ladite première partie (215) et ladite deuxième partie (216),
dans laquelle
ladite première partie d'extrémité (215) et ladite deuxième partie d'extrémité (216) sont coupées de manière amovible avec une première partie d'extrémité et une deuxième partie d'extrémité de ladite partie centrale (217), respectivement.

4. Machine à plaquer les chants (1) selon la revendication précédente, dans laquelle au moins ladite partie centrale (217) dudit séparateur cyclonique (21) comprend au moins une partie en matériau transparent.

5. Machine à plaquer les chants (1) selon la revendication 1 ou 2, dans laquelle ledit séparateur cyclonique (21) est une pièce unique, de préférence en matériau métallique.

6. Machine à plaquer les chants (1) selon l'une quelconque des revendications précédentes, dans laquelle ledit conteneur (22) présente une ouverture (220A) pour accéder à l'intérieur dudit conteneur (22) et une porte (220) pour fermer ladite ouverture (220A).

7. Machine à plaquer les chants (1) selon l'une quelconque des revendications précédentes, dans laquelle ledit récipient (22) comprend au moins une partie en matériau transparent.

8. Machine à plaquer les chants (1) selon l'une quelconque des revendications précédentes, dans laquelle le premier groupe de travail (R1) est un premier groupe de raclage de bord pour finir un premier bord de la bande de chant (N).

9. Machine à plaquer les chants (1) selon l'une quelconque des revendications 2 à 8, dans laquelle le second groupe de travail (R2) est un second groupe de raclage de chants pour finir un second bord de la bande de chant (N), différent du premier bord.

10. Machine à plaquer les chants (1) selon l'une quelconque des revendications précédentes, dans laquelle ladite Machine à plaquer les chants (1) comprend un poste de chant et ledit poste de chant comprend:
- des moyens d'encollage pour appliquer une quantité de colle sur au moins une surface dudit panneau (P),
- des moyens de pression pour exercer une pression sur ladite bande de chant (N) afin que ladite bande de chant (N) soit collée à ladite surface dudit panneau (P).
